# EUROPÄISCHE PATENTANMELDUNG

(11) **EP 4 238 407 A1**
(43) Veröffentlichungstag der Anmeldung: **06.09.2023**
(21) Anmeldenummer: 23153505.5
(22) Anmeldetag: 26.01.2023
(51) Int. Cl.: A01F 12/44

(54) **SELBSTFAHRENDER MÄHDRESCHER SOWIE VERFAHREN ZU DESSEN BETRIEB**

(30) Priorität: 01.03.2022 DE 102022104770
(71) Anmelder: CLAAS Selbstfahrende Erntemaschinen GmbH, 33428 Harsewinkel (DE)
(72) Erfinder: Diekamp, Andreas, 49176 Hilter (DE); Beckmann, Hermann-Konstantin, 32584 Löhne (DE); Vieregge, Christopher, 32694 Dörentrup (DE); Baumgarten, Joachim, 48361 Beelen (DE)
(74) Vertreter: CLAAS Gruppe

(57) **Zusammenfassung**

Die vorliegende Anmeldung betrifft einen selbstfahrenden Mähdrescher (1), umfassend ein Sieborgan (4) mit einem Obersieb (5) und einem Untersieb (6), ein unterhalb des Sieborgans (4) angeordnetes Förderorgan (35) sowie ein in Längsrichtung des Mähdreschers (1) hinter dem Sieborgan (4) angeordnetes Saugwindgebläse (8) zur Erzeugung eines Luftvolumenstroms (9), wobei das Saugwindgebläse (8) eine dem Sieborgan (4) zugeordnete Saugseite (10) und eine von dem Sieborgan (4) weg gerichtete Druckseite (11) aufweist, wobei vor dem Sieborgan (4) ein Lufteintrittsquerschnitt (12) ausgebildet ist, durch den der Luftvolumenstrom (9) ansaugbar ist, wobei in einem Anströmbereich (13) vor dem Sieborgan (4) ein Luftleitelement (17) zumindest einen Teil eines Bodens des Anströmbereichs (13) bildet, wobei das Luftleitelement (17) in einem sich an einen Vorabschnitt (32) des Anströmbereichs (13) anschließenden Aufweitabschnitt (21) des Anströmbereichs (13) angeordnet ist, in dem sich ein Strömungsquerschnitt des Anströmbereichs (13) zu dem Sieborgan (4) hin aufweitet, wobei das Luftleitelement (17) mit einer zu dem Förderorgan (35) hin abfallenden Neigung ausgebildet ist und sich bis zu dem Förderorgan (35) erstreckt.

Um den Verlust von Früchten bei einem Übertritt derselben von dem Sieborgan zu dem Förderorgan zu verringern, wird erfindungsgemäß vorgeschlagen, dass das Luftleitelement (17) in Abhängigkeit einer Anzahl von Fördermitteln (28, 29) des Förderorgans (35) unterschiedlich geneigt ausgebildet ist, wobei eine Neigung des Luftleitelements (17) bei Verwendung eines Förderorgans (35) mit einem Fördermittel (28) größer ist als bei Verwendung eines Förderorgans (35) mit zwei Fördermitteln (28, 29).

## Beschreibung

Die vorliegende Anmeldung betrifft einen selbstfahrenden Mähdrescher gemäß dem Oberbegriff von Anspruch 1. Ferner betrifft die vorliegende Anmeldung ein Verfahren zum Betrieb eines Mähdreschers gemäß dem Oberbegriff von Anspruch 9 sowie eine Serie von Mähdreschern gemäß dem Oberbegriff von Anspruch 10.

Der Mähdrescher umfasst neben den üblichen Arbeitsorganen, insbesondere Schneidorgan, Dreschorgan, Trennorgan, Häckselorgan und Austragorgan, insbesondere ein Sieborgan, das ein Obersieb und ein Untersieb umfasst. Das Sieborgan ist dazu vorgesehen, mittels des Trennorgans abgelöste Früchte von Pflanzenresten zu trennen. Hierbei kommt es insbesondere auf die Trennung der Früchte von feinen Pflanzenresten wie beispielsweise Spreu an. Die Früchte, die typischerweise von Körnern gebildet sind, fallen durch das Sieborgan hindurch in Richtung eines unterhalb des Sieborgans angeordneten Förderorgans, mittels dessen die Früchte in einen Lagertank förderbar sind. Hierzu umfasst das Förderorgan mindestens ein Fördermittel, mittels dessen die Früchte transportierbar sind. Ein solches Fördermittel kann beispielsweise von einer Förderschnecke gebildet sein, die sich in Querrichtung des Mähdreschers erstreckt und die Früchte zu einem Elevator transportiert, der die Früchte schließlich in den Lagertank hebt.

Weiterhin umfasst der Mähdrescher ein Saugwindgebläse, das in Längsrichtung des Mähdreschers betrachtet hinter dem Sieborgan angeordnet ist. Das Saugwindgebläse ist zur Erzeugung eines Luftvolumenstroms geeignet, der an einer Saugseite des Saugwindgebläses angesaugt wird, wobei die Saugseite dem Sieborgan zugeordnet ist. Die genannte Anordnung des Saugwindgebläses relativ zu dem Sieborgan führt dazu, dass der Luftvolumenstrom, der von dem Saugwindgebläse angesaugt wird, entlang des Sieborgans strömt und hierbei schwebefähige Pflanzenreste fluidisiert und schließlich mitreißt. Hierdurch wird während eines Betriebs des Mähdreschers das Sieborgan fortwährend von den feinen Pflanzenresten gereinigt. Der Luftvolumenstrom wird von dem Saugwindgebläse schließlich an einer Druckseite desselben wieder ausgeblasen. Hierbei werden die von dem Luftvolumenstrom mitgeschleppten Pflanzenreste ebenfalls abgegeben, wobei der Luftvolumenstrom mittels des Saugwindgebläses vorzugsweise in rückwärtige Richtung des Mähdreschers geblasen wird.

In Längsrichtung des Mähdreschers ist vor dem Sieborgan mindestens ein Lufteintrittsquerschnitt ausgebildet, durch den der Luftvolumenstrom ansaugbar ist. Auf diese Weise strömt der Luftvolumenstrom von dem Lufteintrittsquerschnitt zu dem Saugwindgebläse und wirkt auf einer Strömungsstrecke, die der Luftvolumenstrom von dem Lufteintrittsquerschnitt bis zu dem Saugwindgebläse zurücklegt, entlang des Sieborgans. Um den Luftvolumenstrom gerichtet dem Sieborgan zuzuführen, ist in einem Anströmbereich vor dem Sieborgan ein Luftleitelement vorhanden, das zumindest einen Teil eines Bodens des Anströmbereichs bildet. Das Luftleitelement ist in einem Aufweitabschnitt des Anströmbereichs angeordnet, der sich in einen Vorabschnitt des Anströmbereichs anschließt. Der Vorabschnitt weist vorzugsweise einen zumindest im Wesentlichen konstanten Strömungsquerschnitt auf, während sich ein Strömungsquerschnitt in dem Anströmbereich zu dem Sieborgan hin aufweitet. Diese Aufweitung kann insbesondere stetig erfolgen, wobei ein senkrecht zu einer Strömungsrichtung des Luftvolumenstroms gemessener Strömungsquerschnitt sich ausgehend von einem Ende des Aufweitabschnitt bis hin zu dem Sieborgan kontinuierlich aufweitet. Das Luftleitelement ist hierbei mit einer zu dem höhenmäßig unterhalb des Sieborgans angeordneten Förderorgan hin abfallenden Neigung ausgebildet und erstreckt sich bis zu dem Förderorgan. Auf diese Weise können Früchte, die aus dem Sieborgan austreten und auf dem Boden des Anströmbereichs landen, mittels des Luftleitelements mit unterstützender Wirkung der Schwerkraft in Richtung des Förderorgans geleitet werden. Insbesondere können die Früchte entlang des Luftleitelements zu dem Förderorgan "rutschen".

Mähdrescher der vorstehend genannten Art sind im Stande Technik bereits bekannt. Hierzu wird beispielhaft auf die europäische Offenlegungsschrift EP 3 662 738 A1 hingewiesen. Besagte Schrift offenbart einen Mähdrescher mit einem Saugwindgebläse, mittels dessen ein Luftvolumenstrom derart ansaugbar ist, dass er entlang eines Sieborgans strömt und hierbei das Sieborgan während eines Betriebs des Mähdreschers fortwährend reinigt. In einem Anströmbereich vor dem Sieborgan sind Luftleitelemente angeordnet, mittels derer der Luftvolumenstrom dem Sieborgan gerichtet zuleitbar ist. Das Saugwindgebläse ist derart unterhalb des Trennorgans positioniert, dass ein auf der Druckseite ausgeblasener Luftvolumenstrom an ein Austragorgan übergebbar ist, das mit einem Häckselorgan des Mähdreschers zusammenwirkt. Auf diese Weise können mittels des Austragorgans sowohl ein von dem Häckselorgan stammender Gutstrom als auch der von dem Saugwindgebläse übernommene Luftvolumenstrom ausgetragen werden.

Die bekannten Mähdrescher sind insoweit nachteilig, als an einem in Längsrichtung des Mähdreschers betrachtet vorderen Ende des Sieborgans abgesiebte Früchte in unbeabsichtigter Weise verloren gehen können, während sie von dem Förderorgan zu dem Förderorgan geleitet werden, insbesondere zu dem Förderorgan herabfallen. Insbesondere ist es möglich, dass Trajektorien einzelner Früchte so verlaufen, dass die Früchte - anstatt zu dem Förderorgan zu gelangen - seitlich oder an einem vorderen Ende des Mähdreschers austreten. Dies kann insbesondere bei unebenem Gelände der Fall sein, beispielsweise wenn der Mähdrescher entlang einer Böschung fährt uns eine auf die Früchte wirkende Gewichtskraft relativ zu dem Mähdrescher nicht direkt nach unten sondern bezogen auf den Mähdrescher schräg orientiert ist, sodass zumindest ein vektorieller Anteil der Gewichtskraft die Früchte in eine Richtung beschleunigt, die von dem Förderorgan wegführt.

Der vorliegenden Anmeldung liegt mithin die Aufgabe zugrunde, den Verlust von Früchten bei einem Übertritt derselben von dem Sieborgan zu dem Förderorgan zu verringern.

Die zugrunde liegende Aufgabe wird erfindungsgemäß mittels eines selbstfahrenden Mähdreschers mit den Merkmalen des Anspruchs 1 gelöst. Vorteilhafte Ausgestaltungen ergeben sich aus den zugehörigen Unteransprüchen.

Der Mähdrescher ist dadurch gekennzeichnet, dass das Luftleitelement, das zumindest einen Teil des Bodens des Anströmbereichs bildet, in Abhängigkeit einer Anzahl von Fördermitteln des Förderorgans unterschiedlich geneigt ausgebildet ist. Die Fördermittel können insbesondere von Förderschnecken gebildet sein, die weiter insbesondere in Längsrichtung des Mähdreschers betrachtet hintereinander angeordnet und sich in Querrichtung des Mähdreschers erstrecken können. Die Neigung des Luftleitelements relativ zu einer Längsachse des Mähdreschers ist erfindungsgemäß bei Verwendung eines Förderorgans mit nur einem Fördermittel geringer als bei Verwendung eines Förderorgans mit mindestens zwei, vorzugsweise genau zwei, Fördermitteln.

Der erfindungsgemäßen Ausgestaltung liegt die Überlegung zugrunde, dass das Risiko eines ungewollten Verlustes von Früchten umso größer ist, desto geringer eine den Transport der Früchte hin zu dem Förderorgan unterstützende Wirkung der Gewichtskraft ist. Bei Verwendung eines Förderorgans, das zwei Fördermittel umfasst, ist ein in Längsrichtung des Mähdreschers betrachtet vorderes Fördermittel relativ zu dem Sieborgan weiter in Richtung eines vorderen Endes des Mähdreschers positioniert als bei Verwendung eines Förderorgans, das lediglich ein Fördermittel umfasst. Die Positionierung des Fördermittels "weiter vorne" bei der Ausgestaltung des Förderorgans mit mindestens zwei Fördermitteln führt dazu, dass eine Transportstrecke der Früchte entlang des Luftleitelements kürzer ist als bei einer Positionierung des Fördermittels "weiter hinten" bei einem Förderorgan mit nur einem Fördermittel. Da die Fördermittel unabhängig von der Ausgestaltung des Förderorgans bevorzugt auf einem gleichen Höhenniveau angeordnet sind, kann damit die Neigung des Luftleitelements hin zu dem Förderorgan bei Verwendung von zwei Fördermitteln steiler ausgebildet sein als bei einem Förderorgan mit lediglich einem Fördermittel. Die steilere Neigung des Luftleitelements führt dazu, dass die Wirkung der Gewichtskraft hinsichtlich eines Antriebs der Früchte zum Transport in Richtung des Förderorgans vergleichsweise stark ausgeprägt ist. Bei der Verwendung eines Förderorgans mit lediglich einem Fördermittel ist die Transportstrecke für die Früchte hingegen vergleichsweise lang, sodass die Höhendifferenz zwischen dem Sieborgan und dem Förderorgan über eine längere Strecke abgebaut wird. Die Neigung des Luftleitelements ist entsprechend geringer ausgebildet, wodurch die Wirkung der Gewichtskraft hinsichtlich des Antriebs der Früchte zum Transport in Richtung des Förderorgans vergleichsweise schwach ausgeprägt ist.

Entsprechend ist eine solche Ausgestaltung von besonderem Vorteil, bei der bei Verwendung eines Förderorgans mit nur einem Fördermittel das Luftleitelement derart an den Vorabschnitt anschließt, dass der Luftvolumenstrom zumindest im Wesentlichen, vorzugweise vollständig, abrissfrei von dem Vorabschnitt zu dem Aufweitabschnitt und mithin dem Luftleitelement überströmt. Bei dieser Ausgestaltung wird das Ziel verfolgt, den mittels des Saugwindgebläses angesaugt Luftvolumenstrom neben einer Reinigungsfunktion für das Sieborgan ferner in einer Transportfunktion für die abgesiebten Früchte zu verwenden. Diese Transportfunktion wird dadurch realisiert, dass der Luftvolumenstrom die in dem Aufweitabschnitt auf dem Luftleitelement aufliegenden Früchte erfasst und eine Druckkraft in Richtung des Förderorgans auf die Früchte ausübt. Um dies zu erreichen, ist es entsprechend von Vorteil, wenn der Luftvolumenstrom zu dem Förderorgan gerichtet ist. Gemäß vorstehender Erläuterung ist dieser Effekt insbesondere dann von Vorteil, wenn die Neigung des Luftleitelements hin zu dem Förderorgan gering ausgeprägt ist, d.h. mithin in einem solchen Fall, bei dem das Förderorgan lediglich ein Fördermittel umfasst. Um wiederum die beschriebene Richtung des Luftvolumenstroms zu erreichen, wird in der beschriebenen Weise das Luftleitelement mit einem "sanften" Übergang an den Vorabschnitt des Anströmbereichs angeschlossen, sodass zumindest ein Teil des Luftvolumenstroms gerichtet entlang des Bodens des Vorabschnitts und sodann ohne einen Strömungsabriss weiter entlang des Bodens des Anströmbereichs und mithin entlang des Luftleitelements strömt. Da letzteres in Richtung auf das Förderorgan zugerichtet ist, bewirkt zumindest dieser Teil des Luftvolumenstroms die gewünschte Förderwirkung auf die Früchte, deren Transport zu dem Förderorgan hierdurch unterstützt wird. Ein versehentlicher Austritt der Früchte aus dem Mähdrescher sowie der damit verbundene Verlust der Früchte ist hierdurch vermindert.

In bevorzugter Ausgestaltung ist bei einem Förderorgan mit nur einem Fördermittel das Luftleitelement zur Vermeidung eines Strömungsabrisses vorzugsweise unter Ausbildung eines Winkels von höchstens 30°, vorzugsweise höchstens 25°, weiter vorzugsweise höchstens 20°, an den Vorabschnitt angeschlossen. Bei einer solchen Ausgestaltung ist die Aufrechterhaltung einer möglichst laminaren Strömung zumindest eines Teils des Luftvolumenstroms entlang des Luftleitelements in Richtung des Förderorgans besonders gut möglich.

Bei einer Ausgestaltung, bei der das Förderorgan genau ein Fördermittel aufweist, ist es besonders von Vorteil, wenn das Luftleitelement unter Ausbildung eines Knicks an den Vorabschnitt anschließt. Der Knick ist hierbei bevorzugt derart ausgebildet, dass der Luftvolumenstrom bei einem Übergang von dem Vorabschnitt zu dem Luftleitelement unter Ausbildung eines Strömungswirbels abreißt. Ein Winkel zwischen dem Luftleitelement und dem Boden des Vorabschnitts kann hierbei mindestens 35°, vorzugsweise mindestens 40°, weiter vorzugsweise mindestens 45°, betragen.

Wie vorstehend dargelegt, ist eine Transportstrecke für die Früchte entlang des Anströmbereichs bei Vorhandensein von zwei Fördermitteln kürzer, als wenn das Förderorgan nur ein Fördermittel aufweist. Dies liegt darin begründet, dass eines der beiden Fördermittel weiter "nach vorne" bezogen auf das Sieborgan gerückt ist und mithin der Anströmbereich bezogen auf das Förderorgan verkürzt ist. Da gleichwohl zwischen dem Vorabschnitt und dem Förderorgan dieselbe Höhendifferenz überwunden wird wie auch bei Vorhandensein eines Förderorgans mit nur einem Fördermittel, ist die Neigung des Luftleitelements bei dieser Ausgestaltung steiler, als wenn das Förderorgan lediglich ein Fördermittel aufweisen würde. Aufgrund der stärkeren Neigung bzw. höheren Steilheit des Luftleitelements ist die Wirkung der Gewichtskraft für den Transport der Früchte hin zu dem Förderorgan in aller Regel ausreichend, sodass auch bei einer ungünstigen Orientierung des Mähdreschers im Raum, beispielsweise an einem Hang, ein Verlust von Früchten im Zuge von deren Übertritt von dem Sieborgan zu dem Förderorgan nur minimal ist. Mit anderen Worten rutschen die Früchte aufgrund der starken Neigung des Fördermittels auch ohne zusätzliche Unterstützung zumindest eines Teils des Luftvolumenstroms typischerweise zuverlässig zu dem jeweiligen Fördermittel. Entsprechend ist es für die Transportwirkung von Bedeutung, dass das Luftleitelement mit einer starken Neigung orientiert ist, während die Übernahme eines Teils des Luftvolumenstroms von dem Vorabschnitt in den Anströmbereich zwecks Unterstützung des Transports der Früchte hin zu dem Förderorgan von untergeordneter Bedeutung ist. Die Anbindung des Luftleitelements an den Vorabschnitt unter Ausbildung des beschriebenen Knicks, der lokal an dem Knick zu einem Abriss der Strömung des Luftvolumenstroms führt, ist entsprechend bei der Ausgestaltung des Förderorgans mit zwei Fördermitteln zu bevorzugen.

Den erfindungsgemäßen Mähdrescher weiter ausgestaltend ist der Aufweitabschnitt unterhalb eines Förderbodens angeordnet, der sich unterhalb eines Dreschkorbs eines Dreschorgans des Mähdreschers befindet.

Weiterhin kann es besonders von Vorteil sein, wenn der Mähdrescher über eine Mehrzahl von weiteren Luftleitelementen verfügt, die in dem Anströmbereich angeordnet sind. Vorteilhafterweise sind diese Luftleitelemente über eine vertikal gemessene Höhe des Anströmbereichs verteilt angeordnet und jeweils entweder dem Obersieb oder dem Untersieb zugeordnet. Die Luftleitelemente sind dafür vorgesehen, Teile des Luftvolumenstroms gerichtet dem Obersieb und dem Untersieb zuzuführen. Insbesondere ermöglichen die Luftleitelemente eine Beruhigung des Luftvolumenstroms, wodurch der Luftvolumenstrom bzw. dessen einzelne Teile an dem Sieborgan besonders effektiv wirken können. Somit hat sich gezeigt, dass die fluidisierende Wirkung des Luftvolumenstroms auf die feinen Pflanzenreste, die zwecks Reinigung des Sieborgans mittels des Luftvolumenstroms zu dem Saugwindgebläse transportiert werden sollen, bei Verwendung der genannten Luftleitelemente erhöht ist.

Sofern die beschriebenen Luftleitelemente vorhanden sind, kann es weiterhin besonders vorteilhaft sein, wenn ein erstes Luftleitelement zur gerichteten Zuführung eines ersten Teils des Luftvolumenstroms zu einer Oberseite des Obersiebs, ein zweites Luftleitelement zur gerichteten Zuführung eines zweiten Teils des Luftvolumenstroms zu einer Unterseite des Obersiebs und/oder ein drittes Luftleitelement zur gerichteten Zuführung eines dritten Teils des Luftvolumenstroms zu einer Unterseite des Untersiebs ausgebildet sind. Bei dieser Ausgestaltung werden das Obersieb und das Untersieb an ihren jeweiligen Ebenen, d.h. an ihren Oberseiten und Unterseiten, gezielt jeweils mit einem Teil des Luftvolumenstroms überströmt, wodurch die Abreinigung des Sieborgans besonders gleichmäßig erfolgt.

Die zugrunde liegende Aufgabe wird ferner erfindungsgemäß mittels eines Verfahrens mit den Merkmalen des Anspruchs 9 gelöst. Das Verfahren ist dadurch gekennzeichnet, dass der Luftvolumenstrom mittels des Luftleitelements, das zumindest einen Teil des Bodens des Anströmbereichs bildet, derart gerichtet wird, dass die Früchte von dem Luftvolumenstrom erfasst und infolgedessen ein Transport der Früchte in Richtung des Förderorgans zumindest unterstützt wird. Diese Ausgestaltung hat den Vorteil, dass der Transport der Früchte hin zu dem Förderorgan nicht ausschließlich von einer auf die Früchte einwirkenden Gewichtskraft angetrieben wird, sondern durch den gerichteten Luftvolumenstrom unterstützt wird. Hierdurch ist einem ungewollten Verlust von Früchten insbesondere bei einer ungünstigen Ausrichtung des Mähdreschers im Raum, beispielsweise in einer Schräglage an einem Hang, verringert.

In besonders bevorzugter Weise wird die gerichtete Führung des Luftvolumenstroms mittels einer abrissfreien Führung des Luftvolumenstroms an einem Übergang von dem Vorabschnitt hin zu dem Aufweitabschnitt des Anströmbereichs erreicht. Hierbei legt sich zumindest ein Teil des Luftvolumenstroms an das Luftleitelement an und kann hierbei die darauf aufliegenden Früchte erfassen. Die Früchte erfahren hierdurch eine Druckkraft, die infolge des Luftvolumenstroms wirkt, wobei besagte Druckkraft wunschgemäß in Richtung des Förderorgans gerichtet ist. Besagte Vorgehensweise ist insbesondere bei der Ausgestaltung des jeweiligen Mähdreschers zu bevorzugen, bei dem das Förderorgan lediglich ein Fördermittel aufweist, wodurch eine Transportstrecke der Früchte zwischen dem Vorabschnitt und dem Förderorgan, d.h. entlang des Aufweitabschnitts, vergleichsweise lang ausgebildet ist, wodurch wiederum eine Neigung des Luftleitelements in dem Anströmbereich vergleichsweise flach ist. Die unterstützende Wirkung des Luftvolumenstroms hinsichtlich des Transports der Früchte zu dem Förderorgan ist entsprechend zur Vermeidung des Verlusts von Früchten von besonderem Vorteil.

Schließlich umfasst die vorliegende Anmeldung eine Serie aus einer Mehrzahl von Mähdreschern, wobei vorzugsweise alle Mähdrescher der Serie gleichen Typs sind und sich lediglich in optionalen Ausstattungsmerkmalen voneinander unterscheiden. Die Mähdrescher der Serie sind jeweils gemäß einer der vorstehend beschriebenen Ausführungen ausgebildet. Die Serie ist dadurch gekennzeichnet, dass ein erster Mähdrescher der Serie ein Förderorgan mit einer Mehrzahl von Fördermitteln und ein zweiter Mähdrescher der Serie ein Förderorgan mit genau einem Fördermittel aufweisen, wobei die Luftleitelemente des ersten Mähdreschers und des zweiten Mähdreschers unterschiedlich geneigt ausgebildet ist, wobei bei dem ersten Mähdrescher eine Neigung des Luftleitelements größer ist als bei dem zweiten Mähdrescher. Die sich durch eine solche Serie ergebenden Vorteile sind vorstehend bereits dargelegt.

Die Erfindung ist nachstehend anhand eines Ausführungsbeispiels, das in den Figuren dargestellt ist, näher erläutert. Es zeigt:
- Fig. 1:: Einen Querschnitt durch einen erfindungsgemäßen Mähdrescher,
- Fig. 2:: Eine schematische Ansicht von Arbeitsorganen des Mähdreschers gemäß Figur 1,
- Fig. 3:: Ein Querschnitt durch ein Saugwindgebläse des Mähdreschers gemäß Figur 1,
- Fig. 4:: Ein Querschnitt durch einen erfindungsgemäßen Mähdrescher im Bereich eines Anströmbereichs vor einem Sieborgan und
- Fig. 5:: Ein Querschnitt durch einen weiteren erfindungsgemäßen Mähdrescher im Bereich eines Anströmbereichs vor einem Sieborgan.

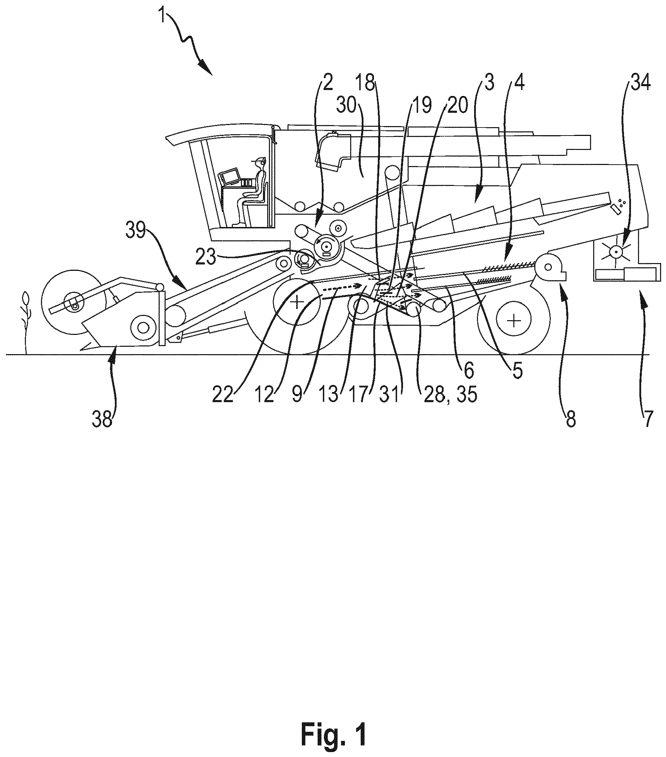

Ausführungsbeispiele, die in den **Figuren 1 bis 5** gezeigt sind, befassen sich mit einem erfindungsgemäßen Mähdrescher **1,** der sich in seinen Grundzügen aus der Darstellung gemäß **Figur 1** ergibt. Der Mähdrescher **1** umfasst eine Mehrzahl von Arbeitsorganen, wobei in dem gezeigten Beispiel der Mähdrescher **1** insbesondere ein Schneidorgan **38,** einen Schrägförderer **39,** ein Dreschorgan **2,** ein Trennorgan **3,** ein Häckselorgan **34,** ein Austragorgan **7,** ein Sieborgan **4** sowie ein Förderorgan **35** umfasst. Mittels des Schneidorgans **38** sind auf einem Feld aufstehende Pflanzen abschneidbar, die sodann mittels des Schrägförderers **39** zu dem Dreschorgan **2** transportiert werden. Mittels des Dreschorgans **2** werden Früchte von übrigen Pflanzenresten der geernteten Pflanzen abgelöst, wobei bereits ein Großteil der abgelösten Früchte unmittelbar durch einen Dreschkorb **23** hindurch auf einen Förderboden **22** abgeschieden wird. Die Pflanzenreste werden zusammen mit verbliebenen Früchten von dem Dreschorgan **2** an das Trennorgan **3** übergeben, das in dem gezeigten Beispiel von einem Hordenschüttler gebildet ist. Mittels des Trennorgans **3** werden die noch nicht durch den Dreschkorb **23** abgeschiedenen Früchte von einem wesentlichen Teil der Pflanzenreste getrennt und an das unterhalb des Trennorgans **3** angeordnete Sieborgan **4** übergeben. Die Pflanzenreste werden hingegen an einem rückwärtigen Ende des Mähdreschers **1** dem Häckselorgan **34** zugeführt, mittels Letzterem gehäckselt und schließlich mittels des Austragorgans **7** aus dem Mähdrescher **1** ausgetragen. Die Früchte werden mittels des Sieborgans **4** von verbliebenen feinen Pflanzenresten getrennt und schließlich dem Förderorgan **35** zugeführt, das sich höhenmäßig unterhalb des Sieborgans **4** befindet. Mittels des Förderorgans **35** werden die Früchte in einen Lagertank **30** gefördert, in dem sie gesammelt werden.

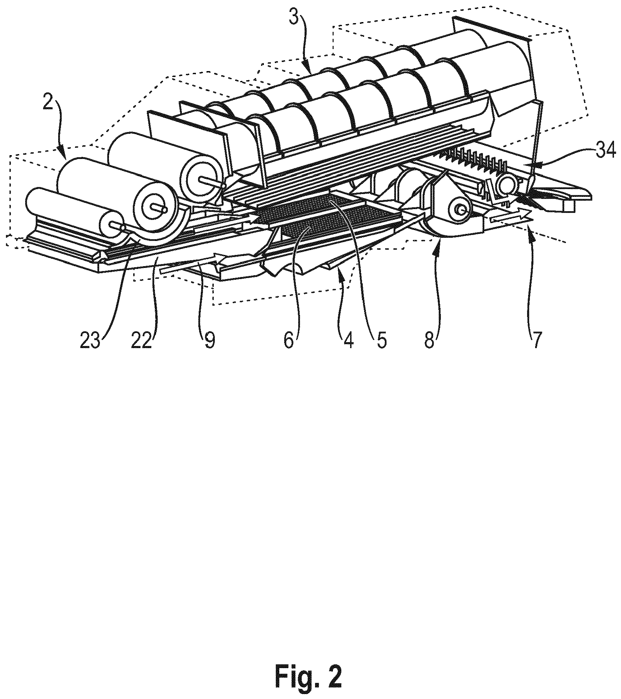

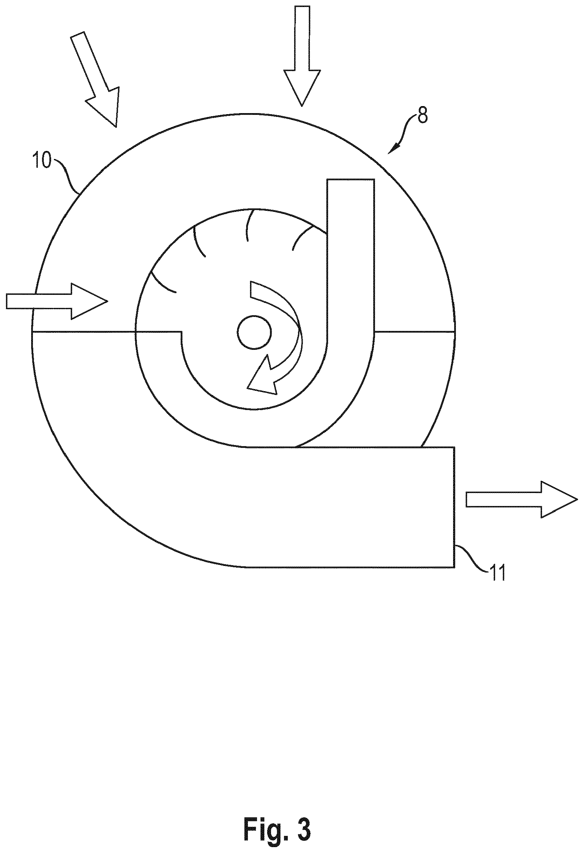

Der Mähdrescher **1** verfügt des Weiteren über ein Saugwindgebläse **8,** das an einem in Längsrichtung des Mähdreschers **1** betrachtet hinteren Ende des Sieborgans **4** an selbiges angeschlossen ist. Das Saugwindgebläse **8,** das sich insbesondere anhand von **Figur 3** ergibt, ist dazu geeignet, an einer Saugseite **10** einen Luftvolumenstrom **9** anzusaugen und diesen an einer Druckseite **11** wieder abzugeben. Hierbei ist die Saugseite **10** derart dem Sieborgan **4** zugeordnet, dass der angesaugte Luftvolumenstrom **9** entlang des Sieborgans **4** geführt wird. Dies ergibt sich besonders gut anhand von **Figur 2****.** Das Saugwindgebläse **8** ist auf diese Weise dazu geeignet, feine Pflanzenreste, die mittels des Sieborgans **4** abgeschieden werden, von dem Sieborgan **4** abzureinigen. Um dies zu erreichen, werden die Pflanzenreste mittels des Luftvolumenstroms **9** fluidisiert und in Richtung des Saugwindgebläses **8** abtransportiert.

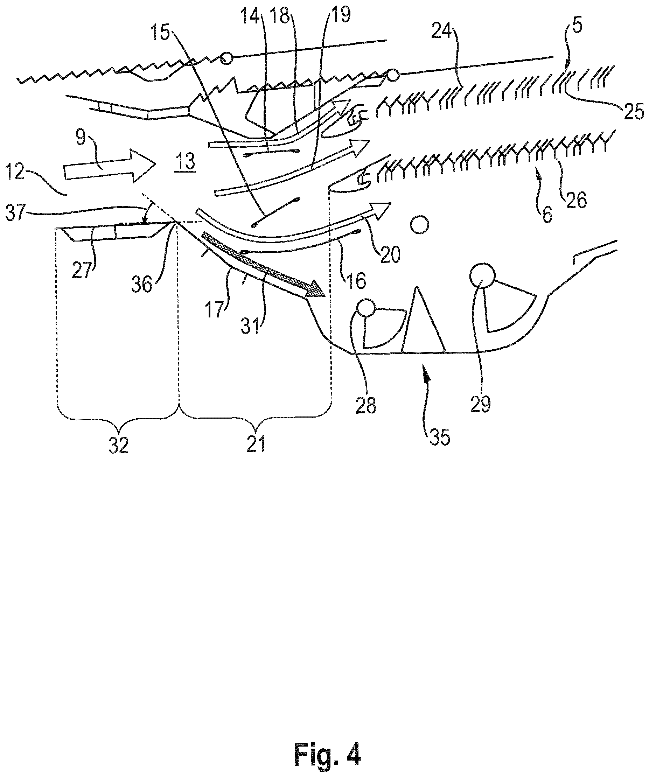

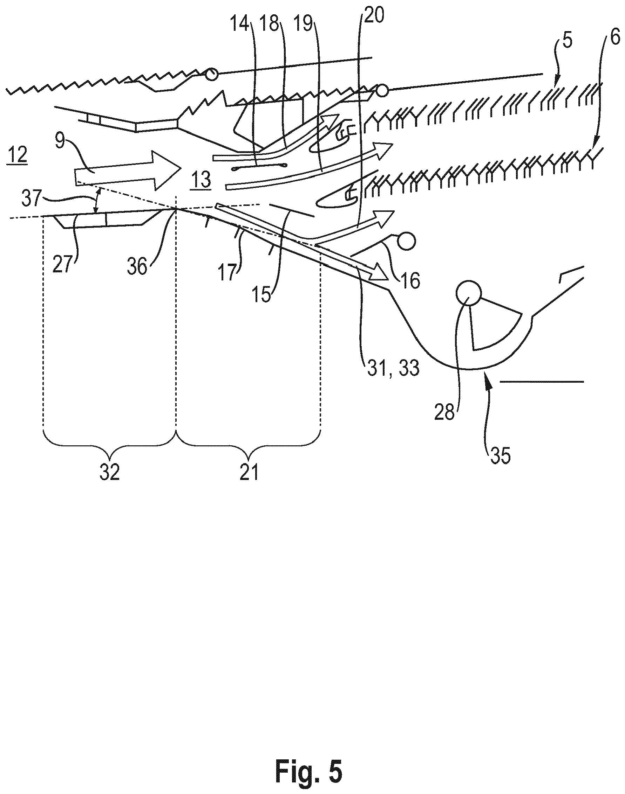

Das Sieborgan **4** umfasst in dem gezeigten Beispiel ein Obersieb **5** sowie ein unterhalb des Obersiebs **5** angeordnetes Untersieb **6.** Um den vorstehend beschriebenen Effekt des Abreinigung der Pflanzenreste von dem Sieborgan **4** zu bewerkstelligen, wird der Luftvolumenstrom **9** sowohl entlang einer Oberseite **24** des Obersiebs **5,** einer Unterseite **25** des Obersiebs **5** sowie einer Unterseite **26** des Untersiebs **6** geführt. Um einzelne Teile **18, 19, 20** des Luftvolumenstroms **9** dem Sieborgan **4** in der beschriebenen Weise gerichtet zuzuführen, ist der Mähdrescher **1** mit einer Mehrzahl von Luftleitelementen **14, 15, 16** ausgestattet. Diese sind dem Sieborgan **4** zugeordnet und derart in einem Anströmbereich **13,** insbesondere ein einem Aufweitabschnitt **21** des Anströmbereichs **13,** verteilt angeordnet, dass sie den Luftvolumenstrom **9** in der beschriebenen Weise dem Sieborgan **4** zuleiten können. Dies ergibt sich besonders gut anhand der **Figuren 4** **und** **5****.**

Der Luftvolumenstrom **9** wird im Zuge seiner Ansaugung mittels des Saugwindgebläses **8** ausgehend von einem Lufteintrittsquerschnitt **12,** der in Längsrichtung des Mähdreschers **1** betrachtet vor dem Sieborgan **4** angeordnet ist, angesaugt und einem Anströmbereich **13** zugeführt. In diesem Anströmbereich **13** strömt der Luftvolumenstrom **9** die Siebeinrichtung **4** an, sodass sich in der vorstehend erläuterten Weise einzelne Teile **18, 19, 20** des Luftvolumenstroms **9** auf das Untersieb **6** und das Obersieb **5** verteilen. Der Anströmbereich **13** umfasst einen Vorabschnitt **32,** in dem ein Strömungsquerschnitt für den Luftvolumenstrom **9** zumindest im Wesentlichen konstant ist, sowie einen Aufweitabschnitt **21,** der sich in Strömungsrichtung des Luftvolumenstroms **9** unmittelbar an den Vorabschnitt **32** anschließt. Der Aufweitabschnitt **21** ist dadurch gekennzeichnet, dass sich der Strömungsquerschnitt des Luftvolumenstroms **9** aufweitet, sodass das Sieborgan **4** über dessen gesamte Höhe hinweg angeströmt werden kann.

Für die Erfindung ist die Überlegung von wesentlicher Bedeutung, das mittels des Sieborgans **4** abgesiebte Früchte zuverlässig dem Förderorgan **35** zugeleitet werden sollen. Ein im Zuge dieser Zuleitung auftretender Verlust von Früchten soll möglichst vermieden werden. Um dies zu erreichen, werden zwei Fälle unterschieden: Zum einen kann das Förderorgan **35** zwei Fördermittel **28, 29** umfassen, die in Längsrichtung des Mähdreschers **1** betrachtet hintereinander angeordnet sind. Die Fördermittel **28, 29** sind hier jeweils von einer sich quer zu einer Längsrichtung des Mähdreschers **1** erstreckenden Förderschnecke gebildet. Eine solche Konstellation ergibt sich anhand von **Figur 4****.**

Sofern zwei Fördermittel **28, 29** vorhanden sind, befindet sich ein in Strömungsrichtung des Luftvolumenstroms **9** erstes Fördermittel **28** in einem vergleichsweise geringen Abstand zu einem Übergang zwischen dem Vorabschnitt **32** und dem Aufweitabschnitt **21.** Erfindungsgemäß umfasst der Mähdrescher **1** ein Luftleitelement **17,** das einen Boden des Aufweitabschnitts **21** bildet. Dieses ist bei der genannten Variante derart ausgebildet, dass es hin zu dem Förderorgan **35** geneigt ist, wobei eine Neigung des Luftleitelements **17** derart ausgeprägt ist, dass ein von Früchten gebildeter Gutstrom **31,** der von von dem Sieborgan **4** auf den Boden des Aufweitabschnitts **21** gefallenen Früchten gebildet ist, allein durch Wirkung der Schwerkraft zuverlässig zu dem Förderorgan **35** transportiert werden kann. Um das Luftleitelement **17** mit einer entsprechenden Neigung auszustatten, schließt es unter Ausbildung eines Knicks **36** an einen Boden **27** des Vorabschnitts **32** an, wobei ein Winkel **37,** den der Boden **27** mit dem Luftleitelement **17** an dem Knick **36** einschließt, in dem gezeigten Beispiel ca. 40° beträgt. Der Knick **36** bewirkt in dieser Ausprägung, dass der Luftvolumenstrom **9** an dem Übergang von dem Vorabschnitt **32** zu dem Aufweitabschnitt **21** unter Ausbildung eines Strömungswirbels abreißt. Mithin liegt zumindest kein nennenswerter Teil des Luftvolumenstroms **9** vor, der entlang des Luftleitelements **17** strömt und hierdurch eine Förderwirkung auf die Früchte in Richtung des Förderorgans **35** ausübt. Aufgrund der starken Neigung des Luftleitelements **17** ist dies jedoch für einen zuverlässigen Transport der Früchte zu dem Förderorgan **35** auch nicht erforderlich.

Alternativ ist der Fall zu betrachten, bei dem das Förderorgan **35** lediglich ein genau Fördermittel **28** aufweist, das hier ebenfalls von einer sich in Querrichtung des Mähdreschers **1** erstreckenden Förderschnecke gebildet ist. Diese Konstellation ist in **Figur 5** veranschaulicht. Wie sich aus einem Vergleich der beiden Konstellationen gemäß der **Figuren 4** **und** **5** ergibt, ist eine Transportstrecke, entlang der auf den Boden des Aufweitabschnitts **21** gelangende Früchte zu dem Förderorgan **35** strömen, länger als bei der Konstellation, bei der das Förderorgan **35** zwei Fördermittel **28, 29** aufweist. Eine Höhendifferenz zwischen dem Boden **27** des Vorabschnitts **32** und dem Förderorgan **35,** die bei beiden Varianten gleich ist, wird entsprechend über eine längere Transportstrecke hinweg abgebaut. Die dementsprechend geringere Neigung des den Boden des Aufweitabschnitts **21** bildenden Luftleitelements **17** hat zur Folge, dass ein von Früchten gebildeter Gutstrom **31** allein unter Wirkung der Schwerkraft nicht in demselben Maße zuverlässig zu dem Förderorgan **35** transportiert werden kann, wie bei der in **Figur 4** dargestellten Konstellation. Um den Transport der Früchte zu dem Förderorgan **35** zu unterstützen, ist das Luftleitelement **17** daher derart an den Vorabschnitt **32** angeschlossen, dass der Luftvolumenstrom **9** an dem Knick **36** zwischen dem Boden **27** des Vorabschnitts **32** und dem Luftleitelement **17** des Aufweitabschnitts **21** nicht abreißt, d.h. abrissfrei von dem Vorabschnitt **32** zu dem Aufweitabschnitt **21** überströmt. Um dies zu erreichen, ist der Knick **36** zwischen dem Boden **27** des Vorabschnitts **32** und dem Boden in dem Aufweitabschnitt **21** lediglich geringfügig ausgeprägt, wobei ein Winkel **37** zwischen dem Boden **27** und dem Luftleitelement **17** in dem gezeigten Beispiel ca. 15° beträgt.

Hierdurch wird der technische Effekt erzielt, dass zumindest ein Teil **33** des Luftvolumenstroms **9** entlang des Luftleitelements **17** strömt und hierbei die auf dem Luftleitelement **17** aufliegenden Früchte erfasst. Hierdurch wird eine Druckkraft auf die Früchte ausgeübt, die den Transport der Früchte hin zu dem Förderorgan **35** unterstützen. Auf diese Weise ist sichergestellt, dass der von den Früchten gebildeter Gutstrom **31** auch dann zuverlässig das Förderorgan **35** erreicht, wenn der Mähdrescher **1** in einer ungünstigen Lage im Raum orientiert ist. Insbesondere vermindert die gerichtete Strömung des Luftvolumenstroms **9** entlang des Leitelements **17** einen unbeabsichtigten Verlust von Früchten, die ansonsten beispielsweise an einem vorderen Ende des Mähdreschers **1** über den Vorabschnitt **32** verloren gehen.

### Bezugszeichenliste

- 1: Mähdrescher
- 2: Dreschorgan
- 3: Trennorgan
- 4: Sieborgan
- 5: Obersieb
- 6: Untersieb
- 7: Austragorgan
- 8: Saugwindgebläse
- 9: Luftvolumenstrom
- 10: Saugseite
- 11: Druckseite
- 12: Lufteintrittsquerschnitt
- 13: Anströmbereich
- 14: Luftleitelement
- 15: Luftleitelement
- 16: Luftleitelement
- 17: Luftleitelement
- 18: erster Teil des Luftvolumenstroms
- 19: zweiter Teil des Luftvolumenstroms
- 20: dritter Teil des Luftvolumenstroms
- 21: Aufweitabschnitt
- 22: Förderboden
- 23: Dreschkorb
- 24: Oberseite
- 25: Unterseite
- 26: Unterseite
- 27: Boden
- 28: Förderorgan
- 29: Förderorgan
- 30: Lagertank
- 31: Gutstrom
- 32: Vorabschnitt
- 33: Teil des Luftvolumenstroms
- 34: Häckselorgan
- 35: Förderorgan
- 36: Knick
- 37: Winkel
- 38: Schneidorgan
- 39: Schrägförderer

## Patentansprüche

1. Selbstfahrender Mähdrescher (1), umfassend
- ein Sieborgan (4) mit einem Obersieb (5) und einem Untersieb (6) zur Trennung abgelöster Früchte von Pflanzenresten,
- ein unterhalb des Sieborgans (4) angeordnetes Förderorgan (35) zur Förderung von Früchten in einen Lagertank (30), sowie
- ein in Längsrichtung des Mähdreschers (1) hinter dem Sieborgan (4) angeordnetes Saugwindgebläse (8) zur Erzeugung eines Luftvolumenstroms (9), mittels dessen das Sieborgan (4) fortwährend reinigbar ist,
wobei das Saugwindgebläse (8) eine dem Sieborgan (4) zugeordnete Saugseite (10), an der der Luftvolumenstrom (9) ansaugbar ist, und eine von dem Sieborgan (4) weg gerichtete Druckseite (11), an der der Luftvolumenstrom (9) abgebbar ist, aufweist,
wobei in Längsrichtung des Mähdreschers (1) betrachtet vor dem Sieborgan (4) mindestens ein Lufteintrittsquerschnitt (12) ausgebildet ist, durch den der Luftvolumenstrom (9) ansaugbar ist,
wobei in einem Anströmbereich (13) vor dem Sieborgan (4), in dem der angesaugte Luftvolumenstrom (9) das Sieborgan (4) anströmt, ein Luftleitelement (17) zumindest einen Teil eines Bodens des Anströmbereichs (13) bildet,
wobei das Luftleitelement (17) in einem sich an einen Vorabschnitt (32) des Anströmbereichs (13) anschließenden Aufweitabschnitt (21) des Anströmbereichs (13) angeordnet ist, in dem sich ein Strömungsquerschnitt des Anströmbereichs (13) zu dem Sieborgan (4) hin aufweitet,
wobei das Luftleitelement (17) mit einer zu dem Förderorgan (35) hin abfallenden Neigung ausgebildet ist und sich bis zu dem Förderorgan (35) erstreckt,
**dadurch gekennzeichnet, dass**
das Luftleitelement (17) in Abhängigkeit einer Anzahl von Fördermitteln (28, 29) des Förderorgans (35) unterschiedlich geneigt ausgebildet ist,
wobei eine Neigung des Luftleitelements (17) bei Verwendung eines Förderorgans (35) mit einem Fördermittel (28) kleiner ist als bei Verwendung eines Förderorgans (35) mit zwei Fördermitteln (28, 29).

2. Mähdrescher (1) nach Anspruch 1, wobei das Förderorgan (25) genau ein Fördermittel (28) aufweist, **dadurch gekennzeichnet, dass** das Luftleitelement (17) derart unter Ausbildung eines Knicks (36) an den Vorabschnitt (32) anschließt, dass der Luftvolumenstrom (9) beim Übergang von dem Vorabschnitt (32) zu dem Luftleitelement (17) unter Ausbildung eines Strömungswirbels abreißt.

3. Mähdrescher (1) nach Anspruch 2, **dadurch gekennzeichnet, dass** das Luftleitelement (17) an dem Knick (36) unter Ausbildung eines Winkels (37) von mindestens 35°, vorzugsweise mindestens 40°, an den Vorabschnitt (32) angeschlossen ist.

4. Mähdrescher (1) nach Anspruch 1, wobei das Förderorgan (25) zwei Fördermittel (28, 29), die in Strömungsrichtung des Luftvolumenstroms (9) hintereinander angeordnet sind, **dadurch gekennzeichnet, dass** das Luftleitelement (17) derart an den Vorabschnitt (32) anschließt, dass der Luftvolumenstrom (9) zumindest im Wesentlichen, vorzugsweise vollständig, abrissfrei von dem Vorabschnitt (32) zu dem Luftleitelement (17) überströmt.

5. Mähdrescher (1) nach Anspruch 4, **dadurch gekennzeichnet, dass** das Luftleitelement (17) unter Ausbildung eines Winkels (37) von höchstens 30°, vorzugsweise höchstens 25°, an den Vorabschnitt (32) angeschlossen ist.

6. Mähdrescher (1) nach einem der vorhergehenden Ansprüche, **dadurch gekennzeichnet, dass** der Aufweitabschnitt (21) unterhalb eines Förderbodens (22) angeordnet ist, der sich unterhalb eines Dreschkorbs (23) eines Dreschorgans (2) befindet.

7. Mähdrescher (1) nach einem der vorhergehenden Ansprüche, **gekennzeichnet durch** eine Mehrzahl von in dem Anströmbereich (13) angeordneten Luftleitelementen (14, 15, 16), wobei mittels der Luftleitelemente (14, 15, 16) Teile (18, 19, 20) des Luftvolumenstroms (9) gerichtet dem Obersieb (5) und dem Untersieb (6) zuführbar sind.

8. Mähdrescher (1) nach Anspruch 7, **dadurch gekennzeichnet, dass** ein erstes Luftleitelement (14) zur gerichteten Zuführung eines ersten Teils (18) des Luftvolumenstroms (9) zu einer Oberseite (24) des Obersiebs (5), ein zweites Luftleitelement (15) zur gerichteten Zuführung eines zweiten Teils (19) des Luftvolumenstroms (9) zu einer Unterseite (25) des Obersiebs (5) und/oder ein drittes Luftleitelement (16) zur gerichteten Zuführung eines dritten Teils (20) des Luftvolumenstroms (9) zu einer Unterseite (26) des Untersiebs (6) ausgebildet sind.

9. Verfahren zum Betrieb eines Mähdreschers (1), der Mähdrescher (1) umfassend
- ein Sieborgan (4) mit einem Obersieb (5) und einem Untersieb (6) zur Trennung abgelöster Früchte von Pflanzenresten,
- ein unterhalb des Sieborgans (4) angeordnetes Förderorgan (35) zur Förderung von Früchten in einen Lagertank (30), sowie
- ein in Längsrichtung des Mähdreschers (1) hinter dem Sieborgan (4) angeordnetes Saugwindgebläse (8) zur Erzeugung eines Luftvolumenstroms (9), mittels dessen das Sieborgan (4) fortwährend reinigbar ist,
wobei das Saugwindgebläse (8) eine dem Sieborgan (4) zugeordnete Saugseite (10), an der der Luftvolumenstrom (9) angesaugt wird, und eine von dem Sieborgan (4) weg gerichtete Druckseite (11), an der der Luftvolumenstrom (9) abgegeben wird, aufweist,
wobei in Längsrichtung des Mähdreschers (1) betrachtet vor dem Sieborgan (4) mindestens ein Lufteintrittsquerschnitt (12) ausgebildet ist, durch den der Luftvolumenstrom (9) angesaugt wird,
wobei in einem Anströmbereich (13) vor dem Sieborgan (4), in dem der angesaugte Luftvolumenstrom (9) das Sieborgan (4) anströmt, ein Luftleitelement (17) zumindest einen Teil eines Bodens des Anströmbereichs (13) bildet,
wobei das Luftleitelement (17) in einem sich an einen Vorabschnitt (32) des Anströmbereichs (13) anschließenden Aufweitabschnitt (21) des Anströmbereichs (13) angeordnet ist, in dem sich ein Strömungsquerschnitt des Anströmbereichs (13) zu dem Sieborgan (4) hin aufweitet,
wobei das Luftleitelement (17) mit einer zu dem Förderorgan (35) hin abfallenden Neigung ausgebildet ist und sich bis zu dem Förderorgan (35) erstreckt,
**dadurch gekennzeichnet, dass**
der Luftvolumenstrom (9) mittels des Luftleitelements (17) derart gerichtet wird, dass die Früchte von dem Luftvolumenstrom (9) erfasst und infolgedessen ihr Transport in Richtung des Förderorgans (35) zumindest unterstützt wird.

10. Serie aus einer Mehrzahl von Mähdreschern (1), die Mähdrescher (1) jeweils umfassend
- ein Sieborgan (4) mit einem Obersieb (5) und einem Untersieb (6) zur Trennung abgelöster Früchte von Pflanzenresten,
- ein unterhalb des Sieborgans (4) angeordnetes Förderorgan (35) zur Förderung von Früchten in einen Lagertank (30), sowie
- ein in Längsrichtung des Mähdreschers (1) hinter dem Sieborgan (4) angeordnetes Saugwindgebläse (8) zur Erzeugung eines Luftvolumenstroms (9), mittels dessen das Sieborgan (4) fortwährend reinigbar ist,
wobei das Saugwindgebläse (8) eine dem Sieborgan (4) zugeordnete Saugseite (10), an der der Luftvolumenstrom (9) ansaugbar ist, und eine von dem Sieborgan (4) weg gerichtete Druckseite (11), an der der Luftvolumenstrom (9) abgebbar ist, aufweist,
wobei in Längsrichtung des Mähdreschers (1) betrachtet vor dem Sieborgan (4) mindestens ein Lufteintrittsquerschnitt (12) ausgebildet ist, durch den der Luftvolumenstrom (9) ansaugbar ist,
wobei in einem Anströmbereich (13) vor dem Sieborgan (4), in dem der angesaugte Luftvolumenstrom (9) das Sieborgan (4) anströmt, ein Luftleitelement (17) zumindest einen Teil eines Bodens des Anströmbereichs (13) bildet,
wobei das Luftleitelement (17) in einem sich an einen Vorabschnitt (32) des Anströmbereichs (13) anschließenden Aufweitabschnitt (21) des Anströmbereichs (13) angeordnet ist, in dem sich ein Strömungsquerschnitt des Anströmbereichs (13) zu dem Sieborgan (4) hin aufweitet,
wobei das Luftleitelement (17) mit einer zu dem Förderorgan (35) hin abfallenden Neigung ausgebildet ist und sich bis zu dem Förderorgan (35) erstreckt,
**dadurch gekennzeichnet, dass**
ein erster Mähdrescher (1) der Serie ein Förderorgan (35) mit einer Mehrzahl von Fördermitteln (28, 29) und ein zweiter Mähdrescher (1) der Serie ein Förderorgan (35) mit genau einem Fördermittel (28) aufweisen,
wobei die Luftleitelemente (17) des ersten Mähdreschers (1) und des zweiten Mähdreschers (1) unterschiedlich geneigt ausgebildet ist,
wobei bei dem ersten Mähdrescher (1) eine Neigung des Luftleitelements (17) größer ist als bei dem zweiten Mähdrescher (1).
